(19) Europäisches Patentamt
European Patent Office
Office européen des brevets

(11) **EP 4 561 122 A1**

(12) **EUROPEAN PATENT APPLICATION**
published in accordance with Art. 153(4) EPC

(43) Date of publication:
**28.05.2025 Bulletin 2025/22**

(21) Application number: **22958204.4**

(22) Date of filing: **05.09.2022**

(51) International Patent Classification (IPC):
**H04W 4/80** *(2018.01)*    **H04W 76/14** *(2018.01)*
**H04W 8/00** *(2009.01)*    **G01S 5/02** *(2010.01)*

(52) Cooperative Patent Classification (CPC):
**G01S 5/02; H04W 4/80; H04W 8/00; H04W 76/14**

(86) International application number:
**PCT/KR2022/013235**

(87) International publication number:
**WO 2024/053749 (14.03.2024 Gazette 2024/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Samsung Electronics Co., Ltd.**
**Suwon-si, Gyeonggi-do 16677 (KR)**

(72) Inventors:
- **CHOI, Junyoung**
  **Suwon-si Gyeonggi-do 16677 (KR)**
- **JUN, Haeyoung**
  **Suwon-si Gyeonggi-do 16677 (KR)**
- **LEE, Mingyu**
  **Suwon-si Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **METHOD AND APPARATUS FOR CONTROLLING NON-UWB DEVICE BY USING UWB IN WIRELESS COMMUNICATION SYSTEM**

(57)    The present disclosure provides a method for controlling a non-UWB device by using a UWB. A method for a first UWB device according to the present disclosure may comprise the steps of: identifying a location of a non-UWB device on the basis of UWB ranging between the first UWB device and each of at least two second UWB devices; and controlling the non-UWB device on the basis of the location of the non-UWB device.

Identify location of non-UWB device,
based on UWB ranging between first UWB device
and each of at least two second UWB devices — 810

Control non-UWB device,
based on location of non-UWB device — 820

# FIG. 8

Processed by Luminess, 75001 PARIS (FR)

**Description**

[Technical Field]

The disclosure relates to UWB communication and, more specifically, to a method and a device for controlling a non-UWB device by using a UWB technology.

[Background Art]

The Internet, which is a human centered connectivity network where humans generate and consume information, is now evolving to the Internet of things (IoT) where distributed entities, such as things, exchange and process information. The Internet of everything (IoE), which is a combination of the IoT technology and the big data processing technology through a connection with a cloud server, etc. has emerged. As technology elements, such as "sensing technology", "wired/wireless communication and network infrastructure", "service interface technology", and "security technology" have been demanded for IoT implementation. Recently, a sensor network, a machine-to-machine (M2M) communication, machine type communication (MTC), and so forth have been researched.

Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

With the advance of wireless communication systems as described above, various services can be provided, and accordingly there is a need for ways to effectively provide these services. For example, a ranging technology for measuring the distance between electronic devices by using an ultra wide band (UWB) may be used. In particular, the UWB technology has a tendency to be loaded in devices provided to smart home, such as door locks and smart speakers, as well as various portable devices (e.g., smartphones and wearable devices).

[Detailed Description of the Invention]

[Technical Problem]

The disclosure provides a method capable of identifying a location of a non-UWB device that does not support UWB, by using UWB ranging between UWB devices. In addition, the disclosure provides a method for recognizing and controlling a non-UWB device, a location of which has been identified using UWB ranging between UWB devices, by using a UWB device.

[Technical Solution]

A method of a first UWB device according to various embodiments of the disclosure may include: identifying a location of a non-UWB device, based on UWB ranging between the first UWB device and each of at least two second UWB devices; and controlling the non-UWB device, based on the location of the non-UWB device.

As an embodiment, a result of the UWB ranging between the first UWB device and each of the at least two second UWB devices may include angle of arrival (AoA) information and information on a distance between the first UWB device and each of the at least two second UWB devices.

As an embodiment, the first UWB device may identify a distance between the first UWB device and the non-UWB device, based on preconfigured information.

As an embodiment, the identifying of the location of the non-UWB device may include: calculating a distance between the at least two second UWB devices; calculating an angle of the first UWB device with reference to a location of a UWB device, which is one of the at least two second UWB devices, based on the distance between the at least two second UWB devices; and identifying a location of the first UWB device with reference to the UWB device, which is one of the at least two second UWB devices, based on the calculated angle of the first UWB device.

As an embodiment, the method may include: calculating a vector from the first UWB device to the non-UWB device; calculating a vector from the UWB device, which is one of the at least two second UWB devices, to the first UWB device; calculating a sum of the calculated vectors; and identifying a location of the non-UWB device with reference to the UWB device, which is one of the at least two second UWB devices, based on the sum of the vectors.

As an embodiment, the at least two second UWB devices may be UWB tag devices.

As an embodiment, the UWB ranging may be performed based on a one-way ranging (OWR) method.

A first UWB device according to various embodiments of the disclosure may include: a transceiver; and at least one processor connected to the transceiver, wherein the at least one processor is configured to: identify a location of a non-UWB device, based on UWB ranging between the first UWB device and each of at least two second UWB devices, and control the non-UWB device, based on the location of the non-UWB device.

[Advantageous Effects]

According to a method of the disclosure, a location of a non-UWB device that does not support UWB ranging can be identified. In addition, according to the method of the disclosure, the non-UWB device can be recognized and controlled by using a UWB device.

[Brief Description of Drawings]

FIG. 1 is a block diagram schematically illustrating an electronic device.
FIG. 2A illustrates an exemplary architecture of a UWB device.
FIG. 2B illustrates an exemplary configuration of a framework of a UWB device.
FIG. 3 illustrates an exemplary configuration of a communication system including a UWB device.
FIG. 4 illustrates a UWB ranging operation between UWB devices.
FIG. 5 illustrates a method in which a UWB-supporting device identifies and controls a non-UWB-supporting device according to an embodiment of the disclosure.
FIG. 6 illustrates an embodiment for identifying a location of a non-UWB-supporting device according to an embodiment of the disclosure.
FIG. 7 is a diagram illustrating a structure of an electronic device according to an embodiment of the disclosure.
FIG. 8 is a flowchart illustrating a method of a first UWB device according to an embodiment of the disclosure.

[Mode for Carrying out the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in various embodiments of the disclosure may include one or more processors.

As used herein, the term "terminal" or "device" may also be referred to as a mobile station (MS), a user equipment (UE), a user terminal (UT), a wireless terminal, an access terminal (AT), a terminal, a subscriber unit, a subscriber station (SS), a wireless device, a wireless communication device, a wireless transmit/receive unit (WTRU), a mobile node, a mobile, or other terms. Various example of the terminal may include a cellular phone, a smartphone having a wireless communication function, a personal digital assistant (PDA) having a wireless communication function, a wireless modem, a portable computer having a wireless communication function, a photographing device, such as a digital camera, having a wireless communication function, a gaming device having a wireless communication function, a music storage and reproduction home appliance having a wireless communication function, an Internet home appliance capable of wireless Internet access and browsing, and portable units or terminals having integrated combinations of the above functions. Furthermore, the terminal may include a machine to machine (M2M) terminal, and a machine type communication (MTC) terminal/device, but is not limited thereto. In the specification, the terminal may also be referred to as an electronic device or simply as a device.

Hereinafter, the operation principle of the disclosure will be described in detail in conjunction with the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

Hereinafter, embodiments of the disclosure will be described in detail in conjunction with the accompanying drawings. In the following description of embodiments of the disclosure, a communication system using UWB will be described by way of example, but the embodiments of the disclosure may be applied to other communication systems having similar technical backgrounds or characteristics. Examples of such communication systems may include communication systems Bluetooth or ZigBee. Therefore, based on determinations by those skilled in the art, the embodiments of the disclosure may be applied to other communication systems through some modifications without significantly departing from the scope of the disclosure.

In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In general, wireless sensor network technology is broadly classified into wireless local area network (WLAN) technology and wireless personal area network (WPAN) technology according to a recognition distance. In this case, a WLAN is a technology based on IEEE 802.11 and is a technology which enables access to a backbone network within a radius of 100 m. Further, a WPAN is a technology based on IEEE 802.15 and includes Bluetooth, ZigBee, ultra-wideband (UWB), and the like. A wireless network in which such wireless network technology is implemented may include a plurality of electronic devices.

According to the definitions by the Federal Communications Commission (FCC), UWB may refer to a wireless communication technology that uses a bandwidth of 500 MHz or higher, or a bandwidth of 20% or more corresponding to a center frequency thereof. UWB may refer a band itself to which UWB communication is applied. UWB may enable secure and accurate ranging between devices. Thus, UWB enables relative location estimation based on a distance between two devices or accurate location estimation of a device based on distances from fixed devices (whose locations are known).

Specific terms used in the following description are provided to help understanding the disclosure, and the use of such specific terms may be changed into other forms without departing from the technical spirit of the disclosure.

An "application dedicated file (ADF)" may be, for example, a data structure within an application data structure that may host an application or application specific data.

An "application protocol data unit (APDU)" may be a command and response used when communicating with an application data structure within a UWB device.

"Application specific data" may be, for example, a file structure having a root level and an application level including UWB controlee information and UWB session data required for a UWB session.

A "controller" may be a ranging device that defines and controls a ranging control message (RCM) (or control message). The controller may define and control ranging features by transmitting a control message.

A "controlee" may be a ranging device using a ranging parameter in an RCM (or control message) received from the controller. The controlee may use ranging features, such as those configured by the controller through a control message.

A "dynamic scrambled timestamp sequence (STS) mode" may be an operation mode in which an STS is not repeated during a ranging session, unlike a "static STS". In this mode, the STS is managed by a ranging device, and a ranging session key that generates the STS may be managed by a secure component.

An "applet" may be, for example, an applet executed on a secure component including UWB parameters and service data. The applet may be a FiRa applet.

A "ranging device" may be a device capable of performing UWB ranging. In the disclosure, the ranging device may be an enhanced ranging device (ERDEV) defined in IEEE 802.15.4z or a FiRa device. The ranging device may be referred to as a UWB device.

A "UWB-enabled application" may be an application for a UWB service. For example, the UWB-enabled application may be an application using a framework API for configuring an OOB connector, a secure service, and/or a UWB service for a UWB session. The "UWB-enabled application" may be simply called an application or a UWB application. The UWB-enabled application may be a FiRa-enabled application.

A "framework" may be a component for providing access to a profile, an individual UWB configuration, and/or a notification. The framework may be, for example, a collection of logical software components including a profile manager, an OOB connector, a secure service, and/or a UWB service. The framework may be a FiRa framework.

An "OOB connector" may be a software component for establishing an out-of-band (OOB) connection (for example, a BLE connection) between ranging devices. The OOB connector may be a FiRa OOB connector.

A "profile" may be a predefined set of UWB and OOB configuration parameters. The profile may be a FiRa profile.

A "profile manager" may be a software component that implements a profile available on a ranging device. The profile manager may be a FiRa profile manager.

A "service" may correspond to implementation of a use case that provides a service to an end-user.

A "smart ranging device" may be a ranging device capable of implementing an optional framework API. The smart ranging device may be a FiRa smart device.

A "global dedicated file (GDF)" may be a root level of application specific data including data required to establish a UWB session.

A "framework API" may be an API used by a UWB-enabled application to communicate with a framework.

An "initiator" may be a ranging device that initiates a ranging exchange. The initiator may initiate a ranging exchange by transmitting a first RFRAME (ranging exchange message).

An "object identifier (OID)" may be an identifier of an ADF in an application data structure.

An "out-of-band (OOB)" may correspond to data communication that does not use UWB as an underlying wireless technology.

A "ranging data set (RDS)" may be data (for example, a UWB session key, a session ID, etc.) required to establish a UWB session where confidentiality, authenticity, and integrity need to be protected.

A "responder" may be a ranging device that responds to an initiator in a ranging exchange. The responder may respond to a ranging exchange message received from the initiator.

An "STS" may be a ciphered sequence for increasing integrity and accuracy of ranging measurement timestamps. The STS may be generated from a ranging session key.

A "secure channel" may be a data channel that prevents overhearing and tampering.

A "secure component" may be, for example, an entity (for example, a secure element (SE) or a trusted execution environment (TEE)) having a defined security level interfacing with a UWBS for the purpose of providing an RDS to the UWBS when a dynamic STS is used.

An "SE" may be a tamper-resistant secure hardware component that may be used as a secure component in a ranging device.

"Secure ranging" may be ranging based on an STS generated through a strong encryption operation.

A "secure service" may be a software component for interfacing with a secure component such as a secure element or a TEE.

A "service applet" may be an applet on a secure component that handles a service-specific transaction.

"Service data" may be data defined by a service provider, which needs to be transferred between two ranging devices to implement a service.

A "service provider" may be an entity that defines and provides hardware and software required to provide a specific service to an end-user.

A "static STS mode" is an operation mode in which an STS is repeated during a session, and does not need to be managed by a secure component.

A "secure UWB service (SUS) applet" may be an applet on an SE communicating with an applet to retrieve data required to enable a secure UWB session with another ranging device. In addition, the SUS applet may transfer corresponding data (information) to a UWBS.

A "UWB service" may be a software component that provides access to a UWBS.

A "UWB session" may be a period from when a controller and a controlee start communicating through UWB until they stop communicating. The UWB session may include ranging, data transfer, or both ranging and data transfer.

A "UWB session ID" may be an ID (for example, a 32-bit integer) that identifies a UWB session and is shared between a controller and a controlee.

A "UWB session key" may be a key used to protect a UWB session. The UWB session key may be used to generate an STS. The UWB session key may be a UWB ranging session key (URSK), and may be simply called a session key.

A "UWB subsystem (UWBS)" may be a hardware component that implements UWB PHY and MAC layers (specs). The UWBS may have an interface for a framework, and an interface for a secure component for searching for an RDS.

A "UWB message" may be a message including a payload IE transmitted by a UWB device (for example, an ERDEV). The UWB message may be, for example, a message such as a ranging initiation message (RIM), a ranging response message (RRM), a ranging final message (RFM), a control message (CM), a measurement report message (MRM), a ranging result report message (RRRM), a control update message (CUM), or a one-way ranging (OWR) message. If necessary, a plurality of ranging messages may be merged into one message.

"OWR" may be a ranging method that uses messages transmitted in one direction between a ranging device and one or more other ranging devices. The OWR may be used to measure time difference of arrival (TDoA). Additionally, the OWR may be used to measure an AoA at a reception side, rather than measuring TDoA. In this case, a pair of an advertiser and an observer may be used. The OWR for measuring an AoA allows the observer to receive an OWR message from the advertiser and measure an AoA to determine an intention, action, or motion of the observer's user. For example, the user's intention to control a specific advertiser may be verified by results of AoA measurements for OWR messages from the advertiser. In the disclosure, the OWR may be referred to as a UWB OWR.

An "advertiser" is a ranging device that transmits an AoA measurement message. The advertiser may include application data (application payload data) as a part of an MAC payload of an AoA measurement message by using a data message IE. The application data may be configured by an upper layer. In the disclosure, the advertiser may be referred to as an advertiser device or a UWB advertiser device. In the disclosure, the AoA measurement message may also be referred to as an OWB message for AoA measurement, a UWB OWR message for AoA measurement, a UWB advertisement message, an advertisement message, etc.

An "observer" is a ranging device that receives an AoA measurement message and measures an AoA for each message. The observer may transmit the measured AoA to an upper layer. The observer may transmit application data to the upper layer when the application data is included in an MAC payload of an AoA measurement message. In the disclosure, the observer may be referred to as an observer device or a UWB observer device.

"TWR" may be a ranging method capable of estimating a relative distance between two devices by measuring a time of flight (ToF) through an exchange of ranging messages between the two devices. The TWR method may be one of double-sided two-way ranging (DS-TWR) and single-sided two-way ranging (SS-TWR). The SS-TWR may be a procedure for performing ranging through one round-trip time measurement. For example, the SS-TWR may include a transmission operation of an RIM from an initiator to a responder, and a transmission operation of an RRM from a responder to an initiator. The DS-TWR may be a procedure for performing ranging through two round-trip time measurements. For example, the DS-TWR may include a transmission operation of an RIM from an initiator to a responder, a transmission operation of an RRM from a responder to an initiator, and a transmission operation of an RFM from an initiator to a responder. Through such a ranging exchanges (ranging message exchange), a time of flight (ToF) may be calculated, and a distance between two devices may be estimated. Meanwhile, during a TWR process, measured AoA information (for example, an AoA azimuth result and an AoA elevation result) may be transferred to another ranging device through an RRRM or other messages. In the disclosure, the TWR may be referred to as UWB TWR.

An "AoA" is an angle of arrival of a received signal and may be expressed as relative angles such as an AoA azimuth and an AoA elevation. For example, it may be assumed that a measurement device is a mobile phone having a display, the Y-axis is a vertical display axis of the phone, the X-axis is a horizontal display axis of the phone, and the Z-axis is orthogonal to the display of the phone. In this case, the AoA azimuth angle may be a relative angle between an input signal projected on the XZ plane and the Z-axis, and the AoA elevation angle may be a relative angle between the input signal and the XZ plane.

In the case of the TWR, the controller (initiator) may measure an AoA azimuth for an RRM and transmit the measured AoA azimuth through a UCI notification message. The controlee (responder) may measure an AoA azimuth for an RIM message and transmit the measured AoA azimuth through an RRRM.

In the case of the TWR, the controller (initiator) may measure an AoA elevation for an RRM and transmit the measured AoA elevation through a UCI notification message. The controlee (responder) may measure an AoA elevation for an RIM message and transmit the measured AoA elevation through an RRRM.

In the case of the OWR, the observer may measure an AoA azimuth and an AoA elevation for an AoA measurement message.

Furthermore, in describing the disclosure, a detailed description of known functions or configurations incorporated herein will be omitted when it is determined that the description may make the subject matter of the disclosure unnecessarily unclear.

Hereinafter, various embodiments of the disclosure will be described with reference to the accompanying drawings.

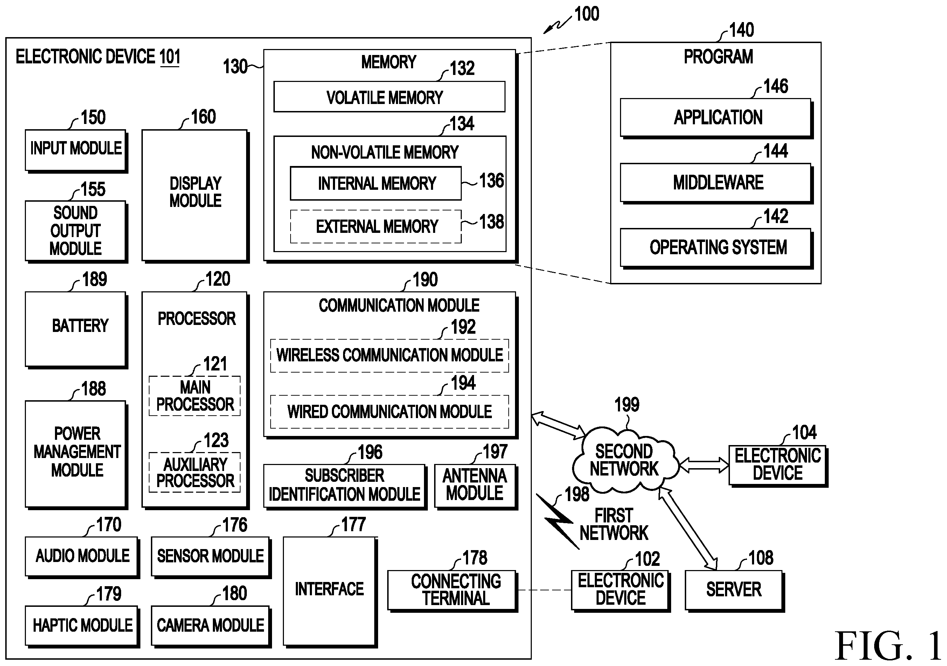

FIG. 1 is a block diagram schematically illustrating an electronic device.

In the embodiment of FIG. 1, the electronic device may be a UWB device or non-UWB device.

Referring to FIG. 1, the electronic device 101 in the network environment 100 may communicate with an electronic device 102 via a first network 198 (e.g., a short-range wireless communication network), or communicate with an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit, a neural processing unit (NPU), an image signal processor, a sensor hub processor, or a communication processor) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated by machine learning. Such learning may be performed, e.g., by the electronic device 101 where the artificial intelligence model is performed or via a separate server (e.g., the server 108). Learning algorithms may include, but are not limited to, for example, supervised learning, unsupervised learning, semi-supervised learning, or reinforcement learning. The artificial intelligence model may include a plurality of artificial neural network layers. The artificial neural network may be one of a deep neural network (DNN), a convolutional neural network (CNN), a recurrent neural network (RNN), a restricted Boltzmann machine (RBM), a deep brief network (DBN), a bidirectional recurrent deep neural network (BRDNN), a deep Q-network, and a combination of two or more thereof, but is not limited to the above examples. Additionally or alternatively, the artificial intelligence model may include a software structure, in addition to the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing back multimedia or records. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth TM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be incorporated into a single component (e.g., a single chip), or may be implemented as multi components (e.g., multiple chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed at a first surface (e.g., the lower surface) of the printed circuit board or adjacent thereto and capable of supporting specified high-frequency bands (e.g., mmWave bands), and a plurality of antennas (e.g., an array antenna) disposed at a second surface (e.g., the upper or side surface) of the printed circuit board or adjacent thereto and capable of transmitting or receiving signals in the specified high- frequency bands.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To this end, a cloud computing, distributed computing, mobile edge computing (MEC), or client-server computing technology may be used, for example. The electronic device 101 may provide ultralow-latency services using, for example, distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments set forth herein may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one or all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions each may include a code generated by a complier or a code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may be separately disposed in another element. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

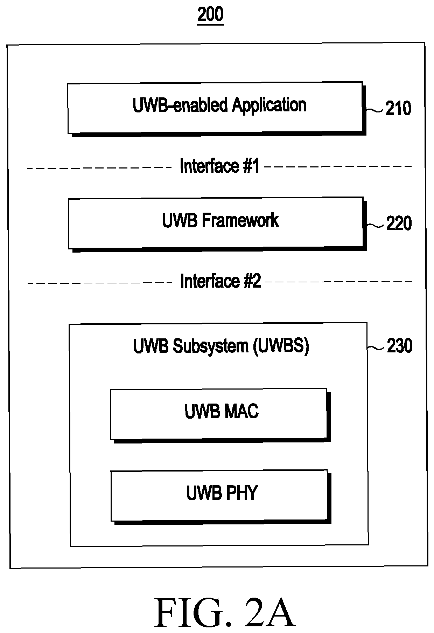

FIG. 2A illustrates an exemplary architecture of a UWB device.

In the disclosure, a UWB device 200 may be an electronic device supporting UWB communication, as an example of the electronic device of FIG. 1. The UWB device 200 may be, for example, a ranging device (RDEV) supporting UWB ranging. In an embodiment, the ranging device may be an enhanced ranging device (ERDEV) defined in IEEE 802.15.4z or a FiRa device defined by the FiRa standard.

In the embodiment of FIG. 2A, the UWB device 200 may interact with another UWB device through a UWB session.

In addition, the UWB device 200 may implement a first interface (Interface #1) which is an interface between a UWB-enabled application 210 and a UWB framework 220, and the first interface enables the UWB-enabled application 210 on the UWB device 200 to use UWB capabilities of the UWB device 200 in a predetermined scheme. In an embodiment, the first interface may be a framework API or a proprietary interface, but is not limited thereto.

In addition, the UWB device 200 may implement a second interface (Interface #2) which is an interface between the UWB framework 210 and a UWB subsystem (UWBS) 230. In an embodiment, the second interface may be a UWB command interface (UCI) or a proprietary interface, but is not limited thereto.

Referring to FIG. 2A, the UWB device 200 may include the UWB-enabled application 210, the framework (UWB framework) 220, and/or the UWBS 230 including a UWB MAC layer and a UWB physical layer. Depending on an embodiment, some entities may not be included in the UWB device, or an additional entity (for example, a security layer) may be further included.

The UWB-enabled application 210 may trigger establishment of a UWB session by the UWBS 230 by using the first interface. In addition, the UWB-enabled application 210 may use one of predefined profiles. For example, the UWB-enabled application 210 may use one of profiles defined in the FiRa standard or a custom profile. The UWB-enabled application 210 may use the first interface to handle relevant events such as service discovery, ranging notifications, and/or error conditions.

The framework 220 may provide access to a profile, an individual UWB configuration, and/or a notification. In addition, the framework 220 may support at least one of a function for performing UWB ranging and transactions, a function for providing an interface to an application and the UWBS 230, or a function for estimating a location of the UWB device 200. The framework 220 may be a set of software components. As described above, the UWB-enabled application 210 may interface with the framework 220 through the first interface, and the framework 220 may interface with the UWBS 230 through the second interface.

Meanwhile, in the disclosure, the UWB-enabled application 210 and/or the framework 220 may be implemented by an application processor (AP) (or processor). Therefore, in the disclosure, the operation of the UWB-enabled application 210 and/or the framework 220 may be understood as being performed by the AP (or processor). In the disclosure, the framework may be referred to as an AP or a processor.

The UWBS 230 may be a hardware component including a UWB MAC layer and a UWB physical layer. The UWBS 230 may perform UWB session management and communicate with a UWBS of another UWB device. The UWBS 230 may interface with the framework 220 through the second interface and obtain secure data from a secure component. In an embodiment, the framework (or application processor) 220 may transmit a command to the UWBS 230 through a UCI, and the UWBS 230 may transfer a response to the command to the framework 220. The UWBS 230 may transfer a notification to the framework 220 through the UCI.

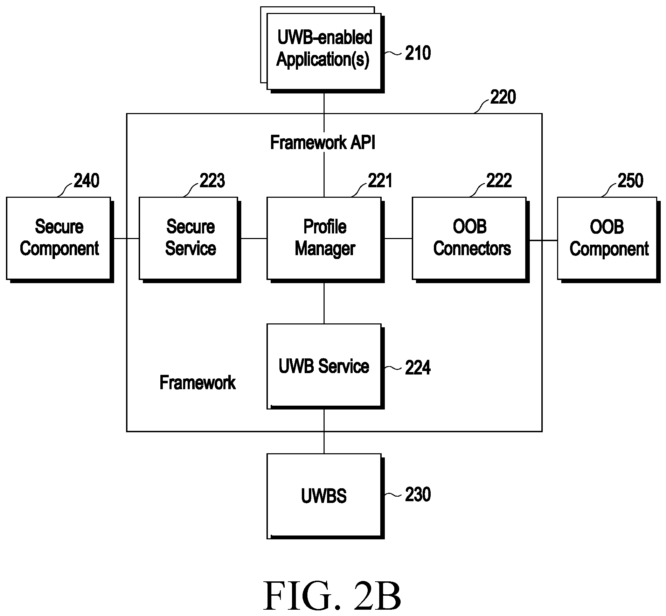

FIG. 2B illustrates an exemplary configuration of a framework of a UWB device.

A framework of a UWB device of FIG. 2B may be an example of the framework of the UWB device of FIG. 2A.

Referring to FIG. 2B, the framework 220 may include, for example, a software component such as a profile manager 221, OOB connector(s) 222, a secure service 223, and/or a UWB service 224.

The profile manager 221 may serve to manage a profile available on the UWB device. The profile may be a set of parameters required to establish communication between UWB devices. For example, the profile may include a parameter indicating which OOB secure channel is used, a UWB/OOB configuration parameter, a parameter indicating whether the use of a specific secure component is mandatory, and/or a parameter related to a file structure of an ADF. The UWB-enabled application 210 may communicate with the profile manager 221 through a first interface (for example, a framework API).

The OOB connector 222 may serve to establish an OOB connection with another device. The OOB connector 222 may handle an OOB step including a discovery step and/or a connection step. An OOB component (for example, a BLE component) 250 may be connected to the OOB connector 222.

The secure service 223 may serve to interface with a secure component 240 such as an SE or a TEE.

The UWB service 224 may serve to manage the UWBS 230. The UWB service 224 may provide access to the UWBS 230 from the profile manager 221 by implementing a second interface.

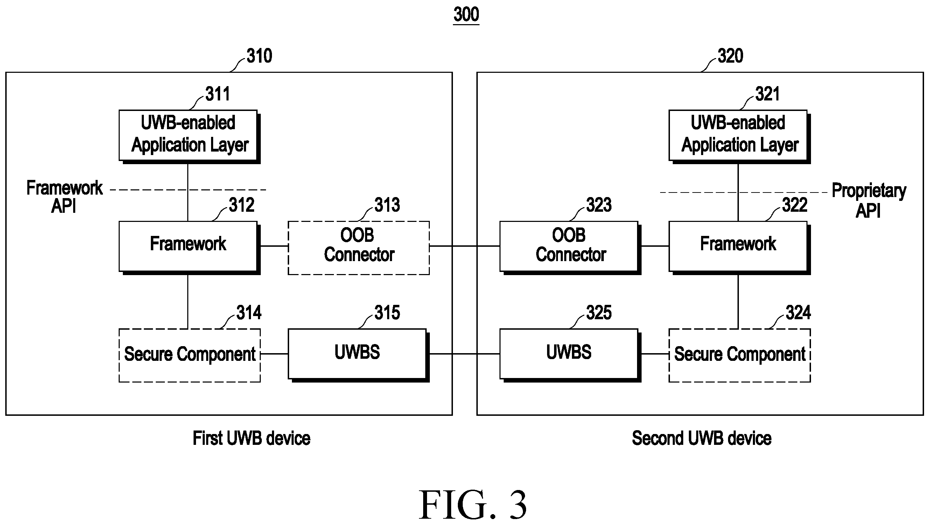

FIG. 3 illustrates an exemplary configuration of a communication system including a UWB device.

Referring to FIG. 3, a communication system 300 includes a first UWB device 310 and a second UWB device 320. In an embodiment, the first UWB device 310 and the second UWB device 320 may be, for example, the UWB device of FIG. 2 or an electronic device including the UWB device of FIG. 2.

For example, the first UWB device 310 may host one or more UWB-enabled applications 311, which may be installed by a user (e.g., a mobile phone). This may be based on, for example, a framework API. The second UWB device 320 may not provide a framework API and may use, for example, a proprietary interface to implement a specific UWB-enabled application. Meanwhile, unlike what is shown, depending on an embodiment, both the first UWB device 310 and the second UWB device 320 may be ranging devices using a framework API, or both the first UWB device 310 and the second UWB device 320 may be ranging devices using a proprietary interface.

The first UWB device 310 and the second UWB device 320 may include UWB-enabled application layers 311 and 321, frameworks 312 and 322, OOB components 313 and 323, secure components 314 and 324, and/or UWBSs 315 and 325. Meanwhile, in the disclosure, the OOB component 313 or 323 and/or the secure component 314 or 324 is an optional component, and may not be included in the UWB device depending on an embodiment.

The framework 312 or 322 may serve to provide access to a profile, an individual UWB configuration, and/or a notification. The framework 312 or 322 may be a set of software components and may include, for example, a profile manager, an OOB connector, a secure service, and/or a UWB service. The description of each component refers to the above description.

The OOB component 313 or 323 may be a hardware component including an MAC layer and/or a physical layer for OOB communication (for example, BLE communication). The OOB component 313 or 323 may communicate with an OOB component of another device. In an embodiment, the first UWB device 310 and the second UWB device 320 may generate an OOB connection (channel) by using the OOB components 313 and 323, and exchange parameters for establishing a UWB session through the OOB channel. In the disclosure, the OOB component 313 or 323 may be referred to as an OOB subsystem.

The secure component 314 or 324 may be a hardware component that interfaces with a framework and/or a UWBS to provide an RDS.

The UWBS 315 or 325 may be a hardware component including a UWB MAC layer and a UWB physical layer. The UWBS 315 or 325 may perform UWB session management and communicate with a UWBS of another UWB device. In an embodiment, the first UWB device 310 and the second UWB device 320 may perform a transaction of service data and UWB ranging through a UWB session established through a UWBS by using the exchanged parameters.

As described above, in the disclosure, the UWB-enabled application layer 311 or 321 and/or the framework 312 or 322 may be implemented by an application processor (AP) (or processor). Therefore, in the disclosure, the operation of the UWB-enabled application layer 311 or 321 and/or the framework 312 or 322 may be understood as being performed by the AP (or processor).

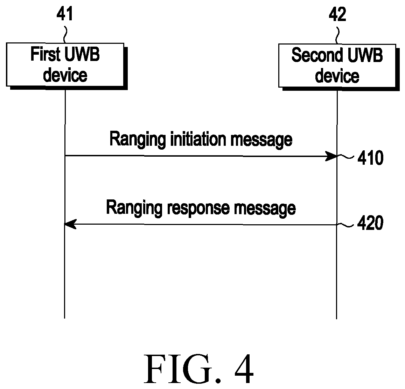

FIG. 4 illustrates a UWB ranging operation between UWB devices.

A UWB device 41 or 42 of FIG. 4 may be the UWB device illustrated in FIGS. 1 to 3, but is not limited thereto, and may be various types of electronic devices supporting UWB ranging.

In the embodiment of FIG. 4, a first UWB device 41 may be a ranging device that initiates a ranging exchange by transmitting a first ranging frame (ranging initiation message). In the disclosure, the first UWB device 41 may be referred to as an initiator.

A second UWB device 42 may be a ranging device that responds to a ranging initiation message received from the initiator. In the disclosure, the second UWB device 42 may be referred to as a responder. In an embodiment, the responder may transmit a ranging response message.

In an embodiment, the first UWB device 41 may be a controller and the second UWB device 42 may be a controlee. The opposite may also be the case. Here, the controller may be a ranging device that defines and controls a ranging feature by transmitting a control message. The controlee may be a ranging device that uses a ranging feature configured through a control message from the controller.

In an embodiment, the first UWB device 41 and the second UWB device 42 may perform a ranging operation by using a preconfigured ranging method. In an embodiment, the ranging method may include a two-way ranging (TWR) method and/or a one-way ranging (OWR) method. In an embodiment, the TWR method may include single-sided two-way ranging (SS-TWR) and/or double-sided two-way ranging (DS-TWR). Such ranging methods refer to the descriptions of the IEEE 802.15.4/4z standard and the FiRa standard that refers thereto.

Referring to FIG. 4, to explain about TWR, in operation 410, the first UWB device 41 may transmit a ranging initiation message to the second UWB device 42.

In operation 410, the second UWB device 42 may transmit a ranging response message to the first UWB device 41. As an embodiment, the ranging response message may be generated based on the ranging initiation message. Through such an exchange operation of the UWB ranging message, the first UWB device 41 and/or the second UWB device 42 may obtain distance information and/or direction information, and identify relative locations and/or directions of the UWB devices, based on the distance information and/or the direction information. This refers to the descriptions of the IEEE 802.15.4/4z standard and the FiRa standard that refers thereto. Meanwhile, in the case of a DS-TWR method, the first UWB device 41 may further transmit a ranging final message to the second UWB device 42.

In an embodiment, the distance information may include time of flight (ToF) information (ToF measurement information). A ToF corresponds to a UWB propagation time between a transmitter and a receiver. By using accurate message timestamping, the ToF may provide accurate estimation of a relative distance between two devices. The ToF information may be measured by one or both ranging devices, and exchanged between the initiator and the responder through a predefined signaling scheme (for example, a control message including a UWB ranging result).

In an embodiment, the direction information may include angle of arrival (AoA) information (AoA measurement information). An AoA may be obtained by measuring the phase difference or time of arrival difference of an arrival signal at antennas. The AoA information may include an AoA azimuth (horizontal angle) and an AoA elevation (vertical angle). The AoA information may be used to determine relative locations of the UWB devices together with the ToF information. The AoA information may be measured by one or both ranging devices, and exchanged between the initiator and the responder through a predefined signaling scheme (for example, a control message including a UWB ranging result).

Hereinafter, referring to each drawing, various embodiments of a method for recognizing and controlling a non-UWB-supporting device by using a UWB tag device and UWB ranging are described.

In the disclosure, assuming that at least two UWB-supporting devices are UWB devices supporting UWB ranging, and the other is a user device (for example, a user's smart phone) supporting UWB ranging, various embodiments of the disclosure are described. However, the disclosure is not limited thereto, and the UWB-supporting devices may be various electronic devices supporting UWB ranging. In an embodiment, the UWB devices and the user device may be the UWB device exemplified in FIGS. 1 to 4.

In the disclosure, a user device supporting UWB ranging may be referred to as a UWB user device, a user device, a first UWB-supporting device, or a first UWB device. In addition, a UWB device supporting UWB ranging may be referred to as a UWB tag device or a tag device, a second UWB-supporting device, or a second UWB device.

In the disclosure, a non-UWB-supporting device is a device that is controlled by a UWB-supporting device (for example, a user device), and may be referred to as a target device or a non-UWB device.

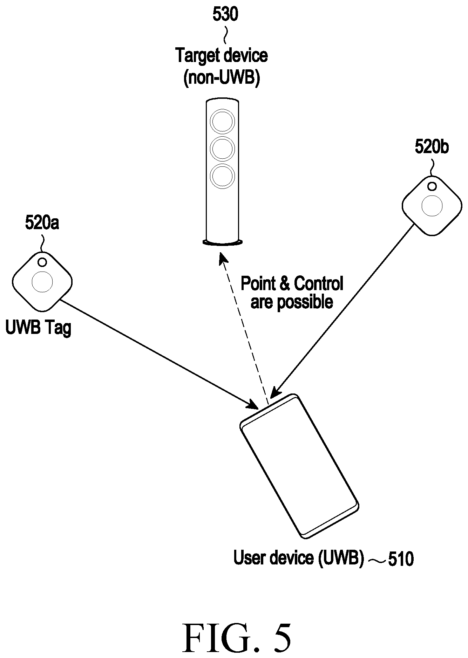

FIG. 5 illustrates a method in which a UWB-supporting device identifies and controls a non-UWB-supporting device according to an embodiment of the disclosure.

The embodiment of FIG. 5 discloses a method in which a UWB user device (or user device) 510 (for example, a user's smart phone) points to and controls a target device 530 (for example, an air conditioner) that is a non-UWB-supporting device, by using a UWB ranging result with at least two UWB devices 520a and 520b (for example, UWB tag devices).

As an embodiment, a UWB ranging operation between the user device 510 and the UWB tag devices 520a and 520b may follow the UWB ranging operation of FIG. 4. For example, the UWB ranging operation of the OWR or TWR method of FIG. 4 may be performed. In this case, the user device 510 may serve as an initiator, and a reference device 520 may serve as a responder. In addition, the opposite case is possible. In addition, the user device may perform ranging by using a signal received from the UWB tag devices 520a and 520b.

In the embodiment of FIG. 5, the user device 510 may be used to identify an approximate location of the target device 530 by pointing to a point on the target device 530, and point to and control the target device 530, based on the approximate location. Therefore, in the embodiment of FIG. 5, the user device 510 needs to be aware of a distance between the user device 510 and the target device 530 in order to point to and control the target device 530. As an embodiment, the user device 510 may directly measure a distance to the target device 530 by using a function such as ToF/Radar. In addition, when the distance cannot be directly measured, a user guide may enable the user device 510 to use a function proposed in this application within a certain distance, thereby determining a distance between the target device 530 and the user device 510.

Hereinafter, an embodiment of a method in which a UWB device identifies and controls a non-UWB-supporting device by using at least two UWB tag devices is described.

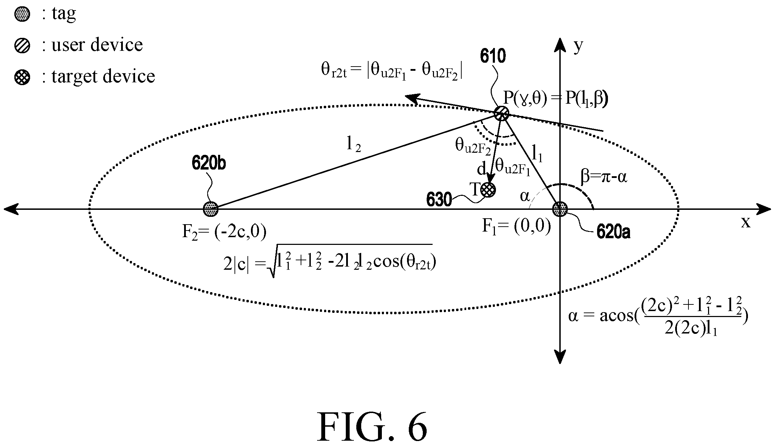

FIG. 6 illustrates a method in which a UWB-supporting device identifies and controls a location of a non-UWB-supporting device according to another embodiment of the disclosure.

The embodiment of FIG. 6 discloses a method in which a user device 610 (for example, a user's smart phone) that is a UWB device identifies a location of a target device 630 (for example, an electronic device such as an air conditioner) that is a non-UWB-supporting device, by using UWB ranging with multiple UWB tag devices 620a and 620b (or at least two UWB tag devices). The UWB user device 610 and at least two UWB tag devices 620a and 620b of FIG. 6 may be the UWB devices described in FIGS. 1 to 4. The at least two UWB tag devices may include a first UWB tag device 620a and a second UWB tag device 620b.

As an embodiment, a UWB ranging operation between the user device 610 and the multiple UWB tag devices 620a and 620b may follow OWR ranging or the UWB ranging operation of FIG. 4. For example, the UWB ranging operation of the TWR method of FIG. 4 may be performed. In this case, the user device 610 may serve as an initiator, and the UWB tag devices 620a and 620b may serve as responders. In addition, the opposite case is possible.

In the embodiment of FIG. 6, it is assumed that the user device 610 is located at a distance "d" from the target device 630 and provided to a user. The distance from the target device 630 may be identified as a two-dimensional distance and may be known in advance through a user guide. The user guide may be configured such that various embodiments of this application for identifying a location of the target device 630 may be applied from when the user device 610 is located at a distance "d" from the target device 930.

In the embodiment of FIG. 6, at least two UWB tag devices 620a and 620b may be required. Each of the UWB tag device 620a and 620b may include a single antenna for UWB communication, and UWB ranging may not need to be performed between the UWB tag devices 620a and 620b. The user device 610 may include an inertial measurement unit (IMU) (inertial sensor). In addition, the user device 610 may measure an angle of arrival (AoA) by including multiple antennas for UWB communication (azimuth AoA measurement is possible). When a reception angle of a signal cannot be measured using only an AoA, an angular acceleration may be measured using a gyroscope to supplement angle calculation.

Referring to FIG. 6, the user device 610 may perform UWB ranging with the multiple UWB tag devices 620a and 620b. For example, the user device 610 may perform UWB ranging in the TWR method and/or OWR method with the multiple UWB tag devices 620a and 620b. Through UWB ranging in the TWR method, the user device 610 may calculate distances l1 and l2 to the multiple UWB tag devices 620a and 620b, respectively. Assuming that a distance between the user device 610 and the target device 630 is already known, the user device 610 may identify all distances to the multiple UWB tag devices 620a and 620b and the target device 630.

In an embodiment, the user device 610 may calculate its own location through communication with the UWB tag devices 620a and 620b. The user device 610 may measure an AoA ($\theta_{u2F_1}$, $\theta_{u2F_2}$) for each of the multiple UWB tag devices 620a and 620b by using a signal received from the multiple UWB tag devices 620a and 620b. For example, the user device 610 may measure an AoA ($\theta_{u2F_1}$, $\theta_{u2F_2}$) for each of the multiple UWB tag devices 620a and 620b by using a signal received from the multiple UWB tag devices 620a and 620b in a UWB ranging process in the TWR or OWR method. By using the obtained AoA, the user device 610 may calculate an angle ($\theta_{r2t}$) between the multiple UWB tag devices 620a and 620b and the user device 610, as shown in equation 1.

【Equation 1】

$$\theta_{r2t} = |\theta_{u2F_1} - \theta_{u2F_2}|$$

The user device 610 may calculate the angle ($\theta_{r2t}$), and calculate a distance between the first UWB tag device and the second UWB tag device by using the distances l1 and l2 between the user device 610 and each of the multiple UWB tag devices 620a and 620b, as shown in equation 2.

【Equation 2】

$$2|c| = \sqrt{l_1^2 + l_2^2 - 2l_1 l_2 cos(\theta_{r2t})}$$

In FIG. 6, the location of the user device 610 is set as P, the location of the first UWB tag device is set as $F_1$, the location of the second UWB tag device is set as $F_2$, and the location of the target device is set as T. Since all lengths of three sides of a triangle ($\triangle$PF1F2) formed by the user device 610 and the multiple UWB tag devices 620a and 620b are identified, all angles of the triangle ($\triangle$PF1F2) may be calculated.

For example, an angle ($\alpha$) at which the first UWB tag device 620a views the user device 610 may be calculated based on a distance between the devices and as shown in equation 3.

【Equation 3】

$$\alpha = acos(\frac{(2c)^2 + l_1^2 - l_2^2}{2(2c)l_1})$$

In addition, an angle at which the second UWB tag device 620b views the user device 610 may also be calculated in a manner similar to equation 3.

By using the angle obtained through equation 3 and the distance between the devices, coordinates (or location) of the user device 610 may be determined with the first UWB tag device 620a as the origin, as shown in FIG. 6. If the coordinates are represented in polar coordinates, a location of the user device 610 may be expressed as P(r, $\theta$), and if represented using the obtained distance and angle, the location may be expressed as P($l_1$, $\beta$) (herein, $\beta = \pi - \alpha$). The calculated polar coordinates of the user device 610, when displayed in a rectangular coordinate system, may appear as shown in equation 4.

【Equation 4】

$$P(l_1, \beta) = (l_1 cos(\beta), l_1 sin(\beta))$$

Referring to FIG. 6, the user device 610 may calculate a location of the target device 630, based on the calculated location of the user device 610. In order to calculate the location of the target device 630 by using a vector, a vector from the first UWB tag device 620a set as the origin to the target device 630 is obtained, which may be expressed as in equation 5.

【Equation 5】

$$\overrightarrow{F_1 T} = \overrightarrow{F_1 P} + \overrightarrow{PT}$$

In order to calculate equation 5, $\overrightarrow{F_1P}$ and $\overrightarrow{PT}$ are required to be calculated. First, in order to obtain a vector to the target device 630 with the user device 610 as a reference point, a vector $\overrightarrow{PT}$ may be obtained. An angle $\gamma = \beta - \theta_{u2F_1}$ is determined by using an angle ($\alpha$) at which the first UWB tag device 620a views the user device 610 and the obtained AoA value $\theta_{u2F_1}$. A calculation as in equation 6 may be made by using a distance between the user device 610 and the target device 630 and the obtained angle ($\gamma$) according to a vector formula.

【Equation 6】

$$\overrightarrow{PT} = (d \cdot \cos(\pi + \gamma),\ d \cdot \sin(\pi + \gamma))$$

Next, since $\overrightarrow{F_1P}$ is a vector value from the first UWB tag device 620a set as the origin to the user device 610, it may be determined using the pre-obtained coordinates of the user device 610. Therefore, it may be determined as $\overrightarrow{F_1P} = P(l_1, \beta)$ = $(l_1 \cos(\beta), l_1 \sin(\beta))$.

Therefore, by applying the obtained values to equation 5, a calculation as in equation 7 may be made.

$$\overrightarrow{F_1T} = (l_1 \cos(\beta) + d \cdot \cos(\pi + \gamma), l_1 \sin(\beta) + d \cdot \sin(\pi + \gamma)$$

The user device 610 may identify a location of the target device 630 from the user device 610 through a series of calculations described in this embodiment, and when the location is identified, the user device may perform an operation for controlling the target device 630.

Through such a registration procedure, a location of the target device 630 may be identified with reference to a location (reference location) of the user device 610. The location of the target device 630 identified in this way may be stored and used in a recognition procedure performed later.

In various embodiments according to the disclosure, the user device 610 may perform UWB ranging with the at least two UWB tag devices 620a and 620b (or UWB anchor devices). The user device 610 may receive a signal from the at least two UWB tag devices 620a and 620b, and calculate an AoA and distances to the at least two UWB tag devices 620a and 620b. The user device 610 may measure a distance between the at least two UWB tag devices 620a and 620b by using the calculated AoA and distances to the at least two UWB tag devices 620a and 620b. The user device 610 may calculate an angle formed by the first UWB tag device 620a and the user device 610, based on the measured distance between the at least two UWB tag devices 620a and 620b. The user device 610 may calculate its own location, based on the calculated angle.

In various embodiments according to the disclosure, the user device 610 may calculate its own location to calculate a location of the target device 630 by calculating a vector from the user device 610 to the target device 630. In this case, the distance from the target device 630 to the user device 610 may have been determined by the user guide, and the user device 610 may be aware of the distance. In order to determine the location of the target device 630, the user device 610 may calculate a vector from the first UWB tag device 620a to the user device 610, and calculate a vector from the user device 610 to the target device 610 to obtain the sum of the vectors.

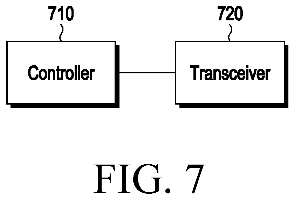

FIG. 7 is a diagram illustrating a structure of an electronic device according to an embodiment of the disclosure.

In the embodiment of FIG. 7, an electronic device may be a UWB device (for example, a user device (or a first UWB device) or a UWB tag device (or a second UWB device) as described in the disclosure) or a non-UWB device (for example, a target device as described in the disclosure).

Referring to FIG. 7, the electronic device may include a transceiver 710 and a controller 720. In the disclosure, the controller 720 may be defined as a circuit or an application-specific integrated circuit, or at least one processor.

The transceiver 710 may transmit or receive a signal to or from another network entity or an electronic device (for example, a UWB device, a UWB tag device, or a non-UWB device). For example, the transceiver 710 may transmit or receive data for UWB ranging by using UWB communication.

The controller 720 may control the overall operation of the electronic device according to various embodiments proposed in the disclosure. Specifically, the controller 720 may control the operation of the electronic device described with reference to FIGS. 1 to 6.

Although not illustrated, the electronic device may include a storage unit. The storage unit may store at least one of information transmitted or received through the transceiver 710 and information generated through the controller 720. For example, the storage unit may store information and data necessary for registration and recognition of a non-UWB device using UWB described with reference to FIGS. 1 to 6.

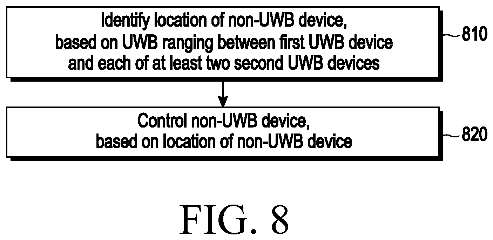

FIG. 8 is a flowchart illustrating a method of a first UWB device according to an embodiment of the disclosure.

In the embodiment of FIG. 8, a first UWB device may correspond to the user device described above, a second UWB device may correspond to the UWB tag device described above, and a non-UWB device may correspond to the target device described above.

Referring to FIG. 8, the first UWB device may identify a location of the non-UWB device, based on UWB ranging between the first UWB device and each of at least two second UWB devices (810).

As an embodiment, a result of the UWB ranging between the first UWB device and each of the at least two second UWB devices may include angle of arrival (AoA) information and information on a distance between the first UWB device and each of the at least two second UWB devices.

As an embodiment, the first UWB device may identify a distance between the first UWB device and the non-UWB device, based on preconfigured information.

As an embodiment, the identifying of the location of the non-UWB device may include: calculating a distance between the at least two second UWB devices; calculating an angle of the first UWB device with reference to a location of a UWB device, which is one of the at least two second UWB devices, based on the distance between the at least two second UWB devices; and identifying a location of the first UWB device with reference to the UWB device, which is one of the at least two second UWB devices, based on the calculated angle of the first UWB device.

As an embodiment, the method may include: calculating a vector from the first UWB device to the non-UWB device; calculating a vector from the UWB device, which is one of the at least two second UWB devices, to the first UWB device; calculating a sum of the calculated vectors; and identifying a location of the non-UWB device with reference to the UWB device, which is one of the at least two second UWB devices, based on the sum of the vectors.

As an embodiment, the at least two second UWB devices may be UWB tag devices.

As an embodiment, the UWB ranging may be performed based on a one-way ranging (OWR) method.

As an embodiment, the first UWB device may include a transceiver and at least one processor connected to the transceiver, wherein the at least one processor may be configured to: identify a location of a non-UWB device, based on UWB ranging between the first UWB device and each of at least two second UWB devices, and control the non-UWB device, based on the location of the non-UWB device.

As an embodiment, the at least one processor may be configured to: calculate a distance between the at least two second UWB devices, calculate an angle of the first UWB device with reference to a location of a UWB device, which is one of the at least two second UWB devices, based on the distance between the at least two second UWB devices, and identify a location of the first UWB device with reference to the UWB device, which is one of the at least two second UWB devices, based on the calculated angle of the first UWB device.

As an embodiment, the at least one processor may be further configured to: calculate a vector from the first UWB device to the non-UWB device, calculate a vector from the UWB device, which is one of the at least two second UWB devices, to the first UWB device, calculate a sum of the calculated vectors, and identify a location of the non-UWB device with reference to the UWB device, which is one of the at least two second UWB devices, based on the sum of the vectors.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

**Claims**

1. A method of a first UWB device, the method comprising:

   identifying a location of a non-UWB device, based on UWB ranging between the first UWB device and each of at least two second UWB devices; and
   controlling the non-UWB device, based on the location of the non-UWB device.

2. The method of claim 1, wherein a result of the UWB ranging between the first UWB device and each of the at least two second UWB devices comprises angle of arrival (AoA) information and information on a distance between the first UWB device and each of the at least two second UWB devices.

3. The method of claim 2, wherein the first UWB device is configured to identify a distance between the first UWB device and the non-UWB device, based on preconfigured information.

4. The method of claim 3, wherein the identifying of the location of the non-UWB device comprises:

calculating a distance between the at least two second UWB devices;

calculating an angle of the first UWB device with reference to a location of a UWB device, which is one of the at least two second UWB devices, based on the distance between the at least two second UWB devices; and

identifying a location of the first UWB device with reference to the UWB device, which is one of the at least two second UWB devices, based on the calculated angle of the first UWB device.

5. The method of claim 4, further comprising:

calculating a vector from the first UWB device to the non-UWB device;

calculating a vector from the UWB device, which is one of the at least two second UWB devices, to the first UWB device;

calculating a sum of the calculated vectors; and

identifying a location of the non-UWB device with reference to the UWB device, which is one of the at least two second UWB devices, based on the sum of the vectors.

6. The method of claim 1, wherein the at least two second UWB devices are UWB tag devices.

7. The method of claim 1, wherein the UWB ranging is performed based on a one-way ranging (OWR) method.

8. A first UWB device comprising:

a transceiver; and

at least one processor connected to the transceiver,

wherein the at least one processor is configured to:

identify a location of a non-UWB device, based on UWB ranging between the first UWB device and each of at least two second UWB devices; and

control the non-UWB device, based on the location of the non-UWB device.

9. The first UWB device of claim 8, wherein a result of the UWB ranging between the first UWB device and each of the at least two second UWB devices comprises angle of arrival (AoA) information and information on a distance between the first UWB device and each of the at least two second UWB devices.

10. The first UWB device of claim 9, wherein the first UWB device is configured to identify a distance between the first UWB device and the non-UWB device, based on preconfigured information.

11. The first UWB device of claim 10, wherein the at least one processor is configured to:

calculate a distance between the at least two second UWB devices;

calculate an angle of the first UWB device with reference to a location of a UWB device, which is one of the at least two second UWB devices, based on the distance between the at least two second UWB devices; and

identify a location of the first UWB device with reference to the UWB device, which is one of the at least two second UWB devices, based on the calculated angle of the first UWB device.

12. The first UWB device of claim 11, wherein the at least one processor is further configured to:

calculate a vector from the first UWB device to the non-UWB device;

calculate a vector from the UWB device, which is one of the at least two second UWB devices, to the first UWB device;

calculate a sum of the calculated vectors; and

identify a location of the non-UWB device with reference to the UWB device, which is one of the at least two second UWB devices, based on the sum of the vectors.

13. The first UWB device of claim 8, wherein the at least two second UWB devices are UWB tag devices.

14. The first UWB device of claim 8, wherein the UWB ranging is performed based on a one-way ranging (OWR) method.

**ELECTRONIC DEVICE 101**

150 INPUT MODULE

155 SOUND OUTPUT MODULE

160 DISPLAY MODULE

130 MEMORY

132 VOLATILE MEMORY

134 NON-VOLATILE MEMORY

136 INTERNAL MEMORY

138 EXTERNAL MEMORY

140 PROGRAM

146 APPLICATION

144 MIDDLEWARE

142 OPERATING SYSTEM

189 BATTERY

120 PROCESSOR

121 MAIN PROCESSOR

123 AUXILIARY PROCESSOR

188 POWER MANAGEMENT MODULE

190 COMMUNICATION MODULE

192 WIRELESS COMMUNICATION MODULE

194 WIRED COMMUNICATION MODULE

196 SUBSCRIBER IDENTIFICATION MODULE

197 ANTENNA MODULE

170 AUDIO MODULE

176 SENSOR MODULE

177 INTERFACE

178 CONNECTING TERMINAL

179 HAPTIC MODULE

180 CAMERA MODULE

199 SECOND NETWORK

198 FIRST NETWORK

104 ELECTRONIC DEVICE

102 ELECTRONIC DEVICE

108 SERVER

100

**FIG. 1**

EP 4 561 122 A1

<u>200</u>

UWB-enabled Application ~210

- - - - - - - - - - Interface #1 - - - - - - - - - -

UWB Framework ~220

- - - - - - - - - Interface #2 - - - - - - - - - -

UWB Subsystem (UWBS) ~230

UWB MAC

UWB PHY

# FIG. 2A

UWB-enabled Application(s) ~ 210

~ 220

Framework API

Secure Component ~ 240

Secure Service ~ 223

Profile Manager ~ 221

OOB Connectors ~ 222

OOB Component ~ 250

Framework

UWB Service ~ 224

UWBS ~ 230

# FIG. 2B

FIG. 3

FIG. 4

530

Target device
(non-UWB)

520b

520a

UWB Tag

Point & Control
are possible

User device (UWB) ~ 510

FIG. 5

FIG. 6

EP 4 561 122 A1

710                                720

| Controller | — | Transceiver |

FIG. 7

Identify location of non-UWB device,
based on UWB ranging between first UWB device
and each of at least two second UWB devices ~810

Control non-UWB device,
based on location of non-UWB device ~820

# FIG. 8

## INTERNATIONAL SEARCH REPORT

<table>
<tr><td>International application No.</td></tr>
<tr><td>**PCT/KR2022/013235**</td></tr>
</table>

**A. CLASSIFICATION OF SUBJECT MATTER**

**H04W 4/80**(2018.01)i; **H04W 76/14**(2018.01)i; **H04W 8/00**(2009.01)i; **G01S 5/02**(2010.01)i

According to International Patent Classification (IPC) or to both national classification and IPC

**B. FIELDS SEARCHED**

Minimum documentation searched (classification system followed by classification symbols)

H04W 4/80(2018.01); G01S 13/02(2006.01); G01S 13/76(2006.01); G01S 13/78(2006.01); G01S 13/87(2006.01); G01S 5/00(2006.01); G01S 5/02(2010.01); G01S 5/14(2006.01); H04W 4/02(2009.01); H04W 4/38(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: UWB device, non-UWB device, location, control, Angle Of Arrival (AoA)

**C. DOCUMENTS CONSIDERED TO BE RELEVANT**

| Category* | Citation of document, with indication, where appropriate, of the relevant passages | Relevant to claim No. |
|---|---|---|
| A | KR 10-2019-0064406 A (SAMSUNG ELECTRONICS CO., LTD.) 10 June 2019 (2019-06-10)<br>See paragraphs [0007] and [0048]; and claim 1. | 1-14 |
| A | US 2020-0182996 A1 (SAMSUNG ELECTRONICS CO., LTD.) 11 June 2020 (2020-06-11)<br>See paragraphs [0266]-[0319]; and claim 1. | 1-14 |
| A | KR 10-2014-0133558 A (QUALCOMM INCORPORATED) 19 November 2014 (2014-11-19)<br>See paragraphs [0046]-[0057]; and claim 1. | 1-14 |
| A | US 2022-0066010 A1 (CISCO TECHNOLOGY, INC.) 03 March 2022 (2022-03-03)<br>See paragraphs [0054]-[0074]; and claim 1. | 1-14 |
| A | US 2022-0137176 A1 (CISCO TECHNOLOGY, INC.) 05 May 2022 (2022-05-05)<br>See paragraphs [0145]-[0150]; and claim 1. | 1-14 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **31 May 2023** | **01 June 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2022/013235**

| Patent document cited in search report | | | Publication date (day/month/year) | Patent family member(s) | | | Publication date (day/month/year) |
|---|---|---|---|---|---|---|---|
| KR | 10-2019-0064406 | A | 10 June 2019 | EP | 3673673 | A1 | 01 July 2020 |
| US | 2020-0182996 | A1 | 11 June 2020 | EP | 3841829 | A1 | 30 June 2021 |
| | | | | KR | 10-2021-0089641 | A | 16 July 2021 |
| | | | | US | 11262445 | B2 | 01 March 2022 |
| | | | | WO | 2020-117012 | A1 | 11 June 2020 |
| KR | 10-2014-0133558 | A | 19 November 2014 | CN | 103002454 | A | 27 March 2013 |
| | | | | CN | 103002454 | B | 13 April 2016 |
| | | | | CN | 104105980 | A | 15 October 2014 |
| | | | | CN | 110133590 | A | 16 August 2019 |
| | | | | CN | 201119134 | Y | 17 September 2008 |
| | | | | EP | 2812721 | A1 | 17 December 2014 |
| | | | | EP | 2812721 | B1 | 18 October 2017 |
| | | | | JP | 2015-514963 | A | 21 May 2015 |
| | | | | US | 2013-0211780 | A1 | 15 August 2013 |
| | | | | WO | 2013-119878 | A1 | 15 August 2013 |
| US | 2022-0066010 | A1 | 03 March 2022 | WO | 2022-046479 | A1 | 03 March 2022 |
| US | 2022-0137176 | A1 | 05 May 2022 | US | 11644525 | B2 | 09 May 2023 |

Form PCT/ISA/210 (patent family annex) (July 2022)